# EUROPÄISCHE PATENTANMELDUNG

(11) **EP 2 933 474 A1**
(43) Veröffentlichungstag der Anmeldung: **21.10.2015**
(21) Anmeldenummer: 15157088.4
(22) Anmeldetag: 02.03.2015
(51) Int. Cl.: F03B 13/26

(54) **Bidirektional anströmbare Horizontalläuferturbine mit passiver Überlastsicherung**

(30) Priorität: 12.03.2014 DE 102014204591
(71) Anmelder: Voith Patent GmbH, 89522 Heidenheim (DE)
(72) Erfinder: Sommerkorn, Klaus, 89518 Heidenheim (DE); Biskup, Frank, 73527 Schwäbisch Gmünd (DE); Arlitt, Raphael, 89077 Ulm (DE)
(74) Vertreter: Dr. Weitzel & Partner

(57) **Zusammenfassung**

Die Erfindung betrifft eine Horizontalläuferturbine (1) zur Energiegewinnung aus einer bidirektionallen Fluidströmung, umfassend eine Nabe (4) und ein Rotorblatt (3.1, 3.2, 3.3) mit einem Blattanschluss (10) zur Befestigung an der Nabe.

Die Erfindung ist dadurch gekennzeichnet, dass entlang der Längserstreckung des Rotorblatts wenigstens ein Auslenkungsabschnitt zur passiven Drehung des Rotorblatts in Richtung der Fahnenstellung vorliegt, der einen ersten und einen zweitenLängsträger (12, 13) mfasst, die durch wenigstens ein Starrelement (24) am Rotorblatt wenigstens mittelbar verbunden sind; wobei dem ersten und dem zweiten Längsträger für einen Profilschnitt in Umfangsrichtung im Bereich des Auslenkungsabschnitts jeweils ein gewichtetes Flächenzentrum (14.1, 14.2) zugeordnet ist; und der Längsträger, dessen gewichtetes Flächenzentrum stromaufwärts zum Kraftangriffspunkt (17.1, 17.2) liegt, eine geringere Querauslenkung aufgrund der durch die Anströmung erzeugten Querkraft (F_{Q}) am Kraftangriffspunkt als der jeweils andere Längsträger aufweist.

## Beschreibung

Die Erfindung betrifft eine bidirektional anströmbare Horizontalläuferturbine, insbesondere mit einem symmetrischen Profil für ein Gezeitenkraftwerk, die eine passive Überlastsicherung umfasst.

Zur Begrenzung des Leistungseintrags von Horizontalläuferturbinen für Windkraftanlagen wird üblicherweise ein Pitch-Verstellmechanismus zur Einstellung eines bestimmten Blattanstellwinkels für die Rotorblätter verwendet. Eine solche Pitch-Verstellbarkeit hat gegenüber einer Leistungsbegrenzung durch einen Strömungsabriss den Vorteil, dass bei hohen Anströmungsgeschwindigkeiten im Überlastfall die Rotorblätter in Fahnenstellung gedreht werden können. Damit folgt, neben einem verringerten Leistungsbeiwert, ein reduzierter Schubbeiwert, sodass mit steigenden Anströmungsgeschwindigkeiten axiale Lasten weniger stark anwachsen.

Eine Übertragung des Konzepts eines Pitch-verstellbaren Rotorblatts für eine tauchende, freistehende Horizontalläuferturbine zur Energiegewinnung aus einer Gezeitenströmung führt zu der Schwierigkeit, dass für frei stehende Anlagen an einem schwer zugänglichen Standort im Meer zusätzliche mechanische Komponenten zur Blattwinkeleinstellung in ein Nabenbauteil aufgenommen werden müssen. Ferner verlangt eine Pitch-Verstellung eine ständig arbeitende Steuerungsvorrichtung, sodass das Risiko besteht, dass beim Ausfall der Steuerung eine über der maximalen Strukturbelastbarkeit liegende Falschanströmung am Blatt vorliegt.

Für ein vereinfachtes und damit ausfallsicheres Konzept werden die Rotorblätter mit einem starren Einbauwinkel an einer Nabe befestigt und die Anlage weist keine Vorrichtung zur Nachführung um die Hochachse auf. Gattungsgemäße Horizontalläuferturbinen zur Ausnutzung einer Gezeitenströmung sind beispielsweise aus DE 10 2007 061 185 A1 bekannt. Werden für ein solches Turbinenkonzept punkt- oder doppeltsymmetrische Profile verwendet, besteht eine bidirektionale Anströmbarkeit. Allerdings kann zur Verringerung der Leistungsaufnahme beim Erreichen der Nennleistung nur eine Drehzahlveränderung vorgenommen werden, die das Rotorblatt vom Leistungsoptimum wegführt. Typischerweise wird für diesen Zweck der Schnelllaufbereich bis zur Durchgangs-Schnelllaufzahl verwendet.

Nachteilig an einem Rotordesign mit einem starr gewählten Einbauwinkel ist, dass im Überlastfall auch für den Schnelllauf hohe axiale Schubkräfte auf die Horizontalläuferturbine wirken, die eine entsprechende Dimensionierung der Blattbefestigungen sowie den nachfolgenden Komponenten des Antriebsstrangs und der Stützstruktur der Anlage voraussetzen.

Um axiale Lasten bei einer Starkanströmung zu verringern, wurden für Windkraftanlagen mit einer Horizontalläuferturbine elastisch biegsame Rotorblätter vorgeschlagen. Diesbezüglich wird beispielhaft auf die DE 10 2004 045 401 A1 verwiesen. Alternativ können schlagende Rotorblätter verwendet werden, indem die Rotorblattbefestigungen an der Nabe Gelenkverbindungen aufweisen. Hierzu wird exemplarisch auf die DE 25 46 884 A1 verwiesen. Für Anlagen, die keine Möglichkeit zur Nachführung um die Hochachse aufweisen und die einer bidirektionalen Anströmung unterliegen, arbeitet die Horizontalläuferturbine in Abhängigkeit der Anströmungsrichtung als Lee- oder als Luv-Läufer. Daher besteht im Luv-Betrieb für den Überlastfall die Gefahr einer Berührung der Stützstruktur durch die Rotorblattspitzen, sodass ein zusätzliches axiales Abstandselement an der Maschinengondel notwendig ist. Aus diesem Grund wird eine passive Leistungsbegrenzung bevorzugt, die eine elastische Durchbiegung der Rotorblätter in Axialrichtung mit einer Torsion in Richtung der Fahnenstellung kombiniert. Für Windkraftanlagen mit einer Vorrichtung zur Drehung der Horizontalläuferturbine um die Anlagenhochachse wurde dieses Konzept beispielsweise durch die US 7 153 090 B2 beschrieben. Einer Weiterentwicklung für unidirektional anströmbare Gezeitenturbinen in Horizontalachsbauweise wird durch die DE 10 2011 053 370 A1 offenbart. Vorgeschlagen wird, elastisch verformbare, raumgreifende Rotorblätter so anzulegen, dass zusätzlich die Zentrifugalkräfte zu einer Verformung in Richtung der Fahnenstellung führen. Die bisher bekannten Biege-Torsionskopplungen sind jedoch nicht für bidirektional anströmbare Rotorblätter geeignet.

Der Erfindung liegt die Aufgabe zugrunde, ein Rotorblatt für eine bidirektional anströmbare Horizontalläuferturbine ohne Pitch-Verstellvorrichtung anzugeben, das im Überlastfall wenigstens die hydraulisch besonders wirksamen radial äußeren Blattbereiche passiv durch eine elastische Verformung in Richtung der Fahnenstellung für die jeweilige Anströmungsrichtung bewegt.

Die der Erfindung zugrunde liegende Aufgabe wird durch eine Vorrichtung mit den Merkmalen des unabhängigen Anspruchs gelöst. Vorteilhafte Ausgestaltungen ergeben sich aus den Unteransprüchen.

Zur Lösung der Aufgabe haben die Erfinder erkannt, dass für eine passive Überlastsicherung eine gattungsgemäße Horizontalläuferturbine mit starr an einer Nabe befestigten Rotorblättern strukturaussteifende Komponenten mit einem anisotropen Verhalten bezüglich einer Querbelastung, d.h. einer Kraftwirkung senkrecht zur Sehnenlinie der Profilschnitte, aufweisen muss. Zusätzlich müssen die strukturaussteifenden Komponenten so angeordnet sein, dass die bezüglich einer Querbelastung steifen Komponenten vor dem Kraftangriffspunkt und die im Vergleich hierzu elastischeren Teile der Strukturaussteifung stromabseitig liegen.

Der durch die bidirektionale Anströmbarkeit bedingte Wechsel des Druckpunkts und der Richtung der Querkraftkomponente setzt dabei voraus, dass die Strukturaussteifungen bezüglich einer Querrichtung weniger nachgiebig sind als in die Gegenrichtung. In einer Querrichtung liegt insbesondere ein höheres E-Modul als in die Gegenrichtung vor, wobei die Anisotropie für die Strukturaussteifungen bevorzugt bezüglich einer Mittellinie des Profils spiegelbildlich angelegt ist.

Dabei besitzen mechanisch durch Zwischenstrukturen im Rotorblatt gekoppelte Strukturaussteifungen jeweils eine Torsionsfähigkeit, die einen hinreichenden Verdrillungsgrad erlaubt. Die Torsion muss eine Querauslenkung der für die jeweilige Querbelastung stärker elastischen Strukturaussteifung ermöglichen. Für eine Weitergestaltung wird bevorzugt, dass zusätzlich die Elastizität gegenüber einer Torsion um die jeweilige Längsachse der Strukturaussteifungen anisotrop ist.

Für eine bidirektionale Anströmung werden eine erste Anströmungsrichtung und eine zweite Anströmungsrichtung betrachtet. Dabei müssen die beiden Anströmungsrichtungen nicht genau entgegengesetzt verlaufen. Insbesondere bei einer Gezeitenströmung kann eine asymmetrische Tidenellipse vorliegen, sodass für die weitere Betrachtung unter einer bidirektionalen Anströmung eine erste Anströmungsrichtung und eine zweite Anströmungsrichtung, die im Bereich von 150 - 210° von der ersten Anströmungsrichtung abweicht, verstanden wird.

Grundlage der Erfindung ist das elastische Verhalten des Rotorblatts unter Überlast. Der Überlastfall kann durch eine vorgegebene Schnelllaufzahlschwelle definiert werden, die oberhalb der leistungsoptimalen Schnelllaufzahl liegt. Dabei ergibt sich die Schnelllaufzahl als Verhältnis der Blattspitzengeschwindigkeit in Umfangsrichtung im Verhältnis zur Anströmungsgeschwindigkeit. Ferner wird bevorzugt eine Anströmungsgeschwindigkeitsschwelle zur Festlegung des Überlastfalls vorausgesetzt.

Ferner wird ein Auslenkungsabschnitt des Rotorblatts betrachtet, der als der Teil des Rotorblatts definiert ist, entlang dessen Längserstreckung wenigstens 80 % der Blatttorsion in Richtung der Fahnenstellung bewirkt wird. Dabei kann der Auslenkungsabschnitt die gesamte Längserstreckung des Blatts erfassen oder es ist lediglich ein Teilabschnitt der Längserstreckung des Rotorblatts als Auslenkungsabschnitt vorgesehen, der dann bevorzugt in der radial inneren Hälfte und besonders bevorzugt im Bereich der Blattwurzel liegt.

Wird ein Profilschnitt in Umfangsrichtung im Bereich des Auslenkungsabschnitts betrachtet, der ein Blattelement mit endlicher Längserstreckung repräsentiert, können die durch Anströmung bewirkten hydrodynamischen Kräfte in einem Kraftangriffspunkt zusammengefasst werden. Erfindungsgemäß liegen ein erster Längsträger und ein zweiter Längsträger entlang des Auslenkungsabschnitts vor, die in Richtung der Profilsehne voneinander beabstandet und so angeordnet sind, dass ein gewichtetes Flächenzentrum des ersten Längsträgers stromaufwärts zum Kraftangriffspunkt und ein gewichtetes Flächenzentrum des zweiten Längsträgers stromabwärts zum Kraftangriffspunkt liegen.

Dabei ist das gewichtete Flächenzentrum so definiert, dass die Beiträge zum E-Modul für eine Querbelastung berechnet werden und mit diesen für den Profilschnitt des Längsträgers eine Gewichtung der Flächenanteile vorgenommen wird. Die zur Festlegung der Querkraft angenommene Querrichtung ist als Senkrechte auf der Profilsehne in der Profilschnittebene definiert. Demnach wird mit dem gewichteten Flächenzentrum der Angriffspunkt der elastischen Gegenkräfte gegen eine Auslenkung in Querrichtung definiert.

Zusätzlich müssen die beiden Längsträger mechanisch gekoppelt werden. Zu diesem Zweck besteht eine wenigstens mittelbare Verbindung über ein Starrelement des Rotorblatts. Diese Kopplung muss nicht zwingend im Auslenkungsabschnitt selbst ausgebildet werden. Entsprechend soll eine wenigstens mittelbare Verbindung die Kopplungsfunktion dann erfüllen, wenn sie eine Gegenkraft gegen eine Abstandsveränderung der gewichteten Flächenzentren der beiden Längsträger im Auslenkungsabschnitt erzeugt. Bevorzugt wird eine wenigstens mittelbare Verbindung, die den Abstand der gewichteten Flächenzentren der beiden Längsträger im Bereich von 95 - 105% des Abstands im unbelasteten Zustand hält. Für eine mögliche Ausführungsform sind Profilstege vorgesehen, die an beiden Längsträgern befestigt sind. Durch diese Kopplung werden zum einen Kraftkomponenten durch die Anströmung in Richtung der Profilsehne abgefangen, zum anderen wirken die Querkräfte senkrecht zur Profilsehne aufgrund der Kopplung auf beide Längsträger.

Erfindungsgemäß muss der jeweils stromaufwärts gelegene Längsträger ein solches E-Modul bezüglich der Querrichtung aufweisen, dass die unter Anströmung am Angriffspunkt vorliegende, senkrecht zur Profilsehne stehende Querkraft am stromaufwärts gelegenen Längsträger zu einer geringeren Querauslenkung als am stromabwärts angeordnete Längsträger führt. Als Folge ist die Querauslenkung des ersten Längsträgers geringer als die durch den zweiten Längsträger bewirkte. Damit erfolgt im Wesentlichen eine Drehung des gewichteten Flächenzentrums des zweiten Längsträgers um das gewichtete Flächenzentrum des ersten Längsträgers, die den hydrodynamischen Anstellwinkel des Blattabschnitts verringert und demnach zu einer Bewegung in Richtung der Fahnenstellung führt.

Bei einem Wechsel von der ersten Strömungsrichtung zur zweiten Strömungsrichtung liegt ein neuer Kraftangriffspunkt für die resultierende hydrodynamische Kraft auf der Profilsehne vor. Ferner ergibt sich für die zweite Anströmungsrichtung eine Querkraft, die entgegengesetzt zur Querkraft bei der ersten Anströmungsrichtung orientiert ist. Des Weiteren muss ein Tausch der Längsträger bezüglich der Zuordnung zur stromaufwärtigen und zur stromabwärtigen Seite betrachtet werden, wobei wiederum der stromaufwärtige Längsträger ein höheres E-Modul bezüglich der nunmehr vorliegenden Querkraft als der stromabwärtige Längsträger aufweist. Daher müssen beide Längsträger bezüglich des E-Moduls in Querrichtung ein anisotropes Verhalten zeigen, indem diese in eine erste Querrichtung gut elastisch verformbar sind, nachfolgend wird diese Richtung als Auslenkungsrichtung bezeichnet, und in eine zweite, entgegengesetzte Querrichtung eine geringere Auslenkung bei der betragsmäßig gleichen Querkraft erzeugen. Diese zweite Querrichtung wird im Folgenden als Starrrichtung bezeichnet.

Längsträger mit einem anisotropen E-Modul in Querrichtung können auf unterschiedliche Weise ausgebildet sein. Eine Möglichkeit sieht die Anordnung eines Obergurts und eines Untergurts vor, die in Querrichtung durch gelenkig angebrachte Stützen beabstandet werden. Wird eine zusätzliche Diagonalverspannung mit einer Richtungskomponente in Querrichtung und einer Richtungskomponente in Längsrichtung, die nur auf Zug belastbar ist, vorgesehen, entsteht eine anisotrope Querbelastbarkeit.

Für eine alternative Ausgestaltung umfasst ein anisotroper Längsträger ein Faserverbundmaterial mit Faserlagen, in der auf Zug belastbare Stränge eine Vorzugsrichtung festlegen. Auch durch die Art der Wicklung kann die Strukturfestigkeit durch eine dominante Schrägwicklung so beeinflusst werden, dass die gewünschte Anisotropie bezüglich der Querbelastbarkeit entsteht. Dabei muss ein Übergewicht der diagonal verlaufenden Lagen in Entsprechung der voranstehend genannten Diagonalabspannung vorliegen. Ferner kann ein anisotropes E-Modul in Querrichtung durch erzielt werden, dass auf gegenüberliegenden Seiten eines Faserverbund-Längsträgers eine in eine übereinstimmende Richtung weisende Filamentgarn-Schrägwicklung verwendet wird.

Für eine weitere Ausgestaltung kann das anisotrope Verhalten durch eine asymmetrische Anordnung eines Stützkörpers realisiert werden. Denkbar ist, in Längserstreckung einen Stützkörper vorzusehen, der bezüglich der Querrichtung auf einer Seite den Längsträger unterstützt und eine Querauslenkung in die Gegenrichtung zulässt. Ferner kann die einseitige Abstützung abschnittsweise erfolgen, um den Bewegungsumfang in die Auslenkungsrichtung zu erhöhen. Dabei werden die eine asymmetrische, seitliche Abstützung bewirkende Komponenten als Teile des Längsträgers mit einer anisotropen Querbelastbarkeit angesehen.

Für eine alternative Ausgestaltung wird das anisotrope E-Modul in Querrichtung durch eine Gelenkverbindung an den Längsträgern realisiert, die parallel zur Sehnenlinie verläuft. Dabei werden durch einseitige Anschläge und federelastische Komponenten an der Gelenkverbindung die Auslenkungsrichtung und die Starrrichtung festgelegt. Eine solche über Gelenke realisierte Ausführung kann mit einer anisotrop biegeelastischen Ausführung kombiniert werden. Des Weiteren werden Gelenke aufgrund des notwendigen Bauraums bevorzugt innerhalb der Nabe angeordnet, sodass ein Schwenk im Bereich der Blattwurzeln möglich ist. Eine Ausführung mit einem räumlich begrenzten Auslenkungsabschnitt im Bereich der Blattwurzel kann mit einem über die wesentliche Längserstreckung vergleichsweise starren Rotorblatt kombiniert werden.

Die nachfolgend beschriebenen bevorzugten Ausführungsbeispiele der Erfindung werden anhand von Figurendarstellungen erläutert, die im Einzelnen Folgendes zeigen:
- Figur 1: zeigt eine erfindungsgemäße Horizontalläuferturbine mit einem bidirektional anströmbaren Profil.
- Figur 2: zeigt den Profilschnitt A-A aus Figur 1 für die erste Anströmungsrichtung.
- Figur 3: zeigt den Profilschnitt A-A für die zweite Anströmungsrichtung.
- Figur 4: zeigt einen Ausschnitt aus Figur 2 im Bereich des ersten Längsträgers.
- Figur 5: zeigt den ersten Längsträger für den Schnitt B-B aus Figur 4.
- Figur 6: zeigt die Auslenkungsrichtung und die Starrrichtung für den Längsträger von Figur 5.
- Figur 7: zeigt einen bezüglich einer Querbelastung anistropen Längsträger aus einem Faserverbundmaterial.
- Figur 8: zeigt einen Profilschnitt einer Ausgestaltung eines Längsträgers in Kastenform mit einer ersten Wicklungsrichtung und einer zweiten Wicklungsrichtung eines Zugbands oder Filamentgarns.
- Figuren 9a - 9d: zeigen den Wicklungsverlauf auf den Seitenflächen für den Längsträger aus Figur 8.
- Figur 10: zeigt einen Profilschnitt einer weiteren Ausgestaltung eines Längsträgers in Kastenform mit einer Wicklungsrichtung für ein Zugband oder Filamentgarn.
- Figuren 11a - 11d: zeigen den Wicklungsverlauf auf den Seitenflächen für den Längsträger aus Figur 10.
- Figur 12: zeigt eine Ausführungsform mit einem als Scharnier wirkenden Gelenk, das einen asymmetrischen Anschlag und ein federelastisches Element umfasst.
- Figur 13: zeigt eine alternative Ausführung des ersten Längsträgers mit einem asymmetrisch angeordneten seitlichen Stützelement.
- Figur 14: zeigt einen Profilschnitt entlang der Schnittlinie C-C aus Figur 13.
- Figur 15: zeigt einen Profilschnitt entlang der Schnittlinie D-D von Figur 13.
- Figur 16: zeigt eine alternative Ausgestaltung für einen Längsträger mit einer abschnittsweise angeordneten, asymmetrischen seitlichen Abstützung.
- Figur 17: zeigt einen Profilschnitt entlang der Schnittlinie E-E aus Figur 16.
- Figur 18: zeigt einen räumlich begrenzten Auslenkungsabschnitt im Bereich der Blattwurzel.
- Figur 19: zeigt einen Schnitt entlang der Schnittlinie F-F aus Figur 18.

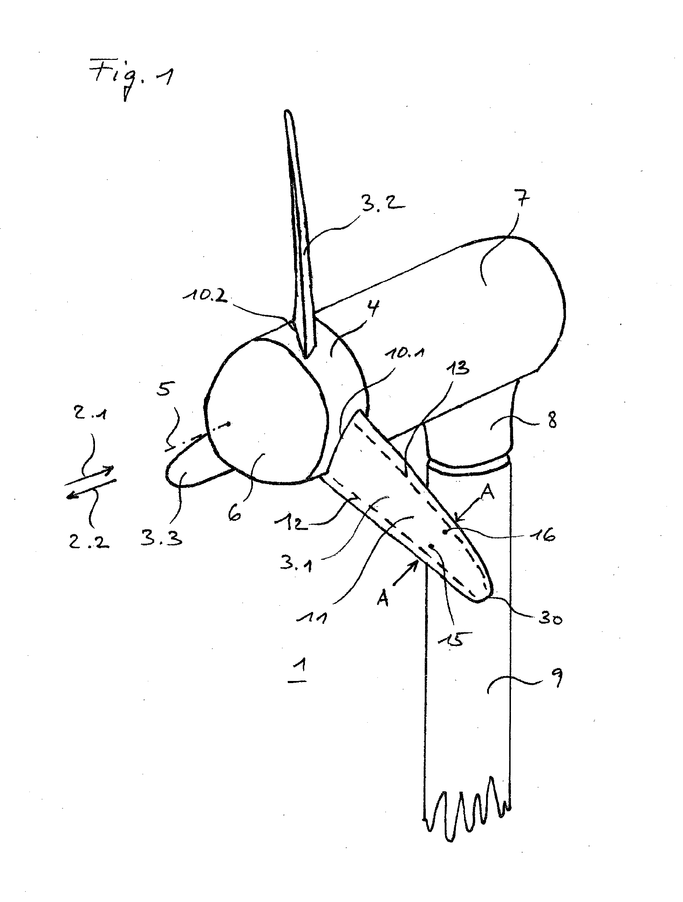

Figur 1 zeigt schematisch vereinfacht eine bevorzugte Ausgestaltung einer erfindungsgemäßen Horizontalläuferturbine 1, die an einer nicht dargestellten Lagerung innerhalb einer Maschinengondel 7 umläuft. An die Maschinengondel 7 schließt ein Turmadapter 8 an, der in Montagestellung drehstarr an einer Stützstruktur 9 gehaltert ist, die eine Verbindung zu einem in der Figur nicht dargestellten Fundament am Gewässergrund oder zu einer schwimmfähigen Einheit bildet. Die Horizontalläuferturbine 1 umfasst ferner eine Nabe 4, der eine Drehachse 5 zugeordnet ist, die eine Axialrichtung festlegt. Hierzu senkrecht ist die Radialrichtung und die Umfangsrichtung der Horizontalläuferturbine 1 definiert, die eine Rotationsebene aufspannen.

Für die dargestellte Ausgestaltung weist die Horizontalläuferturbine 1 drei Rotorblätter 3.1, 3.2, 3.3 auf, die für eine gattungsgemäße Horizontalläuferturbine 1 jeweils an einem Blattanschluss 10.1, 10.2 starr an der Nabe 4 befestigt sind. Angetrieben wird die Horizontalläuferturbine 1 von einer Fluidströmung mit einem zyklischen Richtungswechsel, wobei Figur 1 eine erste Anströmungsrichtung 2.1 und eine entgegengesetzt hierzu gerichtete zweite Anströmungsrichtung 2.2 zeigt. Wird zur Anströmung eine Gezeitenströmung verwendet, liegt unter Umständen der Fall vor, dass die erste Anströmungsrichtung 2.1 nicht genau entgegengesetzt zur zweiten Anströmungsrichtung 2.2 verläuft. Für die vorliegende Anmeldung wird eine reversible Strömung betrachtet, für die die erste Anströmungsrichtung 2.1 und die zweite Anströmungsrichtung 2.2 um wenigstens 150° voneinander abweichen.

Die erfindungsgemäße Horizontalläuferturbine 1 weist für bidirektional anströmbare Rotorblätter 3.1 - 3.3 eine passive Überlastsicherung auf, die einen Auslenkungsabschnitt 11 umfasst, der bei starker Anströmung durch die hydraulischen Kräfte so verdreht wird, das wenigstens ein Teil des Rotorblatts 3.1 - 3.3 sich in Richtung der Fahnenstellung bewegt. Hierunter wird eine elastische Auslenkung verstanden, die den hydrodynamischen Anstellwinkel verringert und damit die Leistungsbeiwerte und die Schubbeiwerte herabsetzt.

In der in Figur 1 skizzierten Ausgestaltung erstreckt sich der Auslenkungsabschnitt 11 über die gesamte Längserstreckung des Rotorblatts 3.1 - 3.3, die vom Blattanschluss 10.1, 10.2 bis zur Rotorblattspitze 30 reicht. Entlang der Längserstreckung des Rotorblatts 3.1 - 3.3 sind ein erster Längsträger 12 sowie ein zweiter Längsträger 13 angeordnet. Betrachtet man den ersten Druckpunkt 15 des Rotorblatts 3.1 - 3.3, der das Wirkzentrum der Summe der hydraulischen Kräfte für die erste Anströmungsrichtung 2.1 darstellt, so ist der Längsträger 12 derart angeordnet, dass dieser stromaufwärts zum ersten Druckpunkt 15 liegt. Der zweite Längsträger 13 befindet sich dann stromabwärts. Für die zweite Anströmungsrichtung 2.2 verschiebt sich der Angriffspunkt der resultierenden hydraulischen Kraft zum zweiten Druckpunkt 16. In diesem Fall liegt der zweite Längsträger 13 stromaufwärts zum zweiten Druckpunkt 16 und der erste Längsträger 12 entsprechend stromabwärts.

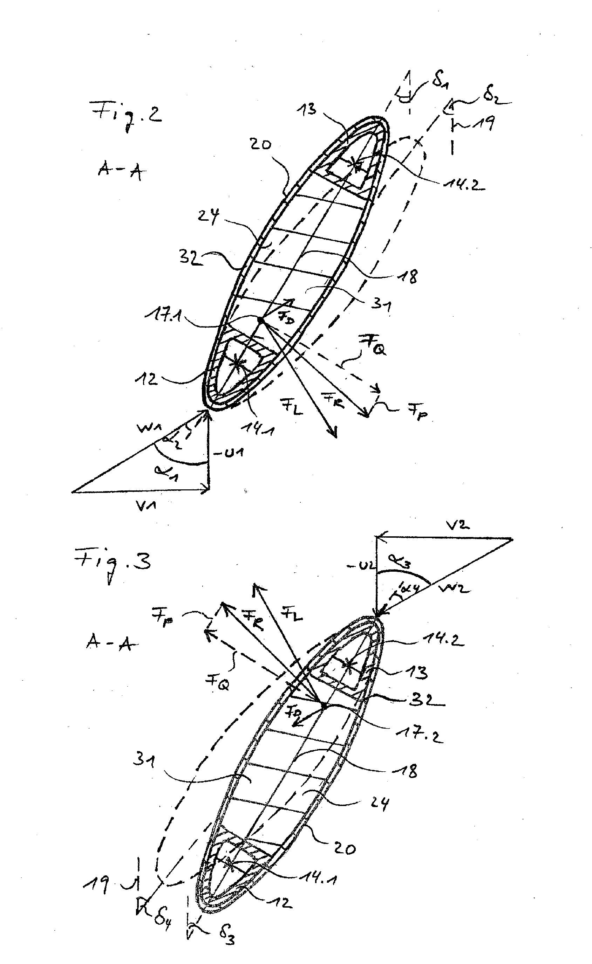

Für das dargestellte Ausführungsbeispiel weisen die beiden Längsträger 12, 13 eine anisotrope Elastizität gegenüber einer Querbelastung auf, was nachfolgend anhand des in den Figuren 2 und 3 gezeigten Profilschnitts für die in Figur 1 skizzierten Schnittlinie A-A genauer erläutert wird.

Figur 2 zeigt für die erste Anströmungsrichtung 2.1 die effektive Anströmung w₁ als vektorielle Addition der Anströmungsgeschwindigkeit v₁ und der negativen Umfangsgeschwindigkeit -u₁, die zu einem Strömungswiderstand F_{D} und einem Auftrieb F_{L} am Profil führt. Daraus ergibt sich die resultierende hydrodynamische Kraft F_{R}, die am Kraftangriffspunkt 17.1 wirkt. Für die weitere Betrachtung der elastischen Verformung des Profils wird die resultierende hydrodynamische Kraft der Profilschnittlinie vektoriell aufgeteilt in eine zur Profilsehne 18 parallele Kraftkomponente F_{P} und eine zur Profilsehne 18 senkrechte Querkraft F_{Q}. Für die weitere Betrachtung wird davon ausgegangen, dass die zur Profilsehne 18 parallele Kraftkomponente F_{P} keinen wesentlichen Verformungsbeitrag im Hinblick auf die passive Überlastsicherung liefert.

Der für die erste Anströmungsrichtung 2.1 stromaufwärts liegende erste Längsträger 12 ist für die skizzierte Ausführung ein D-Träger. Dieser ist, wie der stromabwärts liegende zweite Längsträger 13, schematisch vereinfacht dargestellt. Für weitere, im Einzelnen nicht gezeigte alternative Ausführungsformen können die beiden Längsträger 12, 13 als Doppel-T-Träger, als Z-Träger oder als Kastenträger ausgeführt sein. Wesentlich sind dabei die Lage und die Verformungscharakteristik der Längsträger 12, 13 im Hinblick auf eine Querbelastung.

Zur Festlegung der Lage der beiden Längsträger 12, 13 werden für diese jeweils ein gewichtetes Flächenzentrum 14.1, 14.2 ermittelt. Dabei erfolgt im Profilschnitt 20 eine Gewichtung im Blick auf den Beitrag zum E-Modul bezüglich einer Querbelastung, die in der Profilschnittebene liegt und senkrecht zur Profilsehne 18 steht. Entsprechend wird die Nulllinie, die den unbelasteten Zustand charakterisiert, als Auffädellinie der dem jeweiligen Längsträger 12, 13 zugeordneten gewichteten Flächenzentren 14.1, 14.2 verstanden.

Für eine erfindungsgemäße Ausführung liegt im Auslenkungsabschnitt 11 das dem jeweiligen Längsträger 12, 13 zugeordnete gewichtete Flächenzentrum 14.1, 14.2 so, dass sowohl für die erste Anströmungsrichtung 2.1 als auch für die zweite Anströmungsrichtung 2.2 jeweils im Wechsel das gewichtete Flächenzentrum 14.1, 14.2 des ersten Längsträgers 12 oder des zweiten Längsträgers 13 stromaufwärts liegt und das jeweils andere gewichtete Flächenzentrum 14.1, 14.2 stromabwärts angeordnet ist. Für die in Figur 2 dargestellte erste Anströmungsrichtung 2.1 liegt das gewichtete Flächenzentrum 14.1 stromaufwärts zum Kraftangriffspunkt 17.1 während sich das gewichtete Flächenzentrum 14.2 des zweiten Längsträgers 13 stromabwärts befindet.

Der erste Längsträger 12 und der zweite Längsträger 13 sind wenigstens mittelbar über ein Starrelement 24 verbunden. Für den vorliegenden Profilschnitt liegt zu diesem Zweck ein Profilsteg 31 vor. Über die Längsträger 12, 13 und den Profilschnitt 31 erstreckt sich die Rotorblatthülle 32. Der Profilsteg 31 koppelt die beiden Längsträger 12, 13 und legt deren Abstand in Richtung der Profilsehne 18 fest.

Des Weiteren liegt im Auslenkungsabschnitt 11 eine unterschiedliche Elastizität der beiden Längsträger 12, 13 bei einer Beaufschlagung mit einer Querkraft F_{Q} vor. Für die in Figur 2 bei der ersten Anströmungsrichtung 2.1 resultierende Richtung der Querkraft F_{Q} ist der stromaufwärts liegende erste Längsträger 12 starrer als der stromabwärts liegende zweite Längsträger 13. Als Folge ergibt sich eine elastische Verformung mit einer Querauslenkung des gewichteten Flächenzentrums 14.2 des zweiten Längsträgers 13 und einer Drehung in Uhrzeigerrichtung um das gewichtete Flächenzentrum 14.1 des ersten Längsträgers 12. Diese Ausweichbewegung ist als gestricheltes Profil dargestellt. Der sich durch die elastische Verformung ergebende hydrodynamische Anstellwinkel α₂ ist kleiner als der hydrodynamische Anstellwinkel α₁ des unverformten Zustands. Durch die im Wesentlichen durch die elastische Auslenkung des abstromseitig angeordneten zweiten Längsträgers 13 bewirkte Torsion des Rotorblatts 3.1 - 3.3 resultiert eine Annäherung an die Fahnenstellung.

Figur 3 zeigt die Situation nach einem Strömungsrichtungswechsel, wobei nunmehr die zweite Anströmungsrichtung 2.2 mit einer effektiven Anströmung w₂ auf das Profil trifft. Dabei ergibt sich eine resultierende hydrodynamische Kraft F_{R}, die am Angriffspunkt 17.2 wirkt. Durch den Strömungsrichtungswechsel liegt das gewichtete Flächenzentrum 14.2 des zweiten Längsträgers 13 stromaufwärts, während das gewichtete Flächenzentrum 14.1 des ersten Längsträgers 12 stromabwärts liegt. Betrachtet man wiederum die Wirkung der Querkraft F_{Q} als zur Profilsehne 18 senkrechte Komponente der resultierenden hydrodynamischen Kraft F_{R}, ergibt sich eine Querauslenkung des gewichteten Flächenzentrums 14.1 des ersten Längsträgers 12 und einer Drehung in Uhrzeigerrichtung um das gewichtete Flächenzentrum 14.2 des zweiten Längsträgers 13. Demnach stellt der erste Längsträger 12 die in Querrichtung elastisch verformbare Komponente dar, während der zweite Längsträger 13 das starre Element für eine Querbelastung bildet. Damit kehren sich die Elastizitätseigenschaften gegenüber der in Figur 2 gezeigten Situation um. Demnach müssen beide Längsträger 12, 13 spiegelbildlich zueinander jeweils ein anisotropes, d.h. ein in Abhängigkeit der Querkraftrichtung unterschiedlich gewähltes, elastisches Verhalten aufweisen. Die beiden Längsträger 12, 13 werden dann so verbaut, dass der jeweils stromabseitig liegende Längsträger 12, 13 ein geringes E-Modul gegenüber einer elastischen Verformung in die jeweils vorliegende Richtung der Querkraft F_{Q} aufweist. Nachfolgend werden unterschiedliche Ausgestaltungen, die eine solche anisotrope Querbelastbarkeit aufweisen, erläutert.

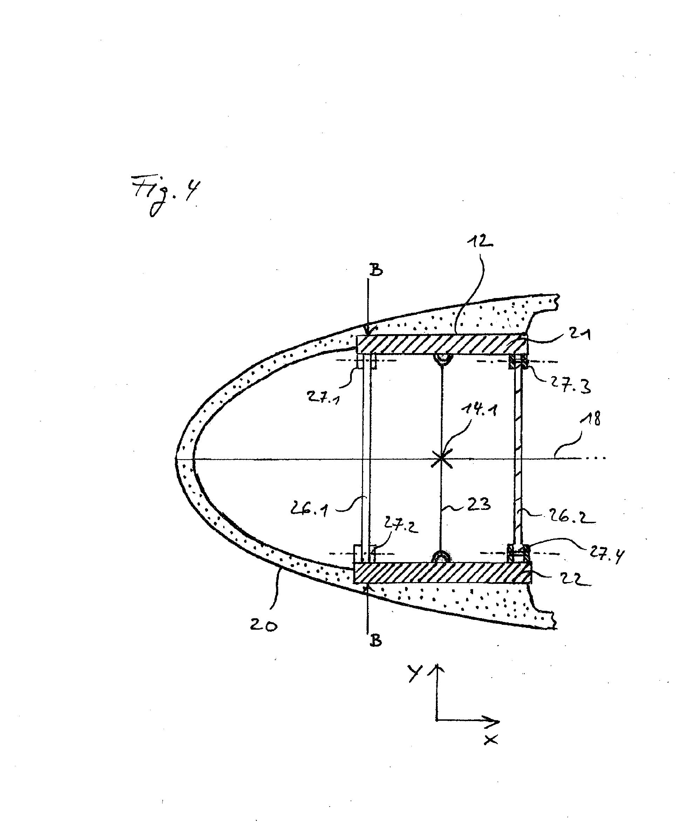

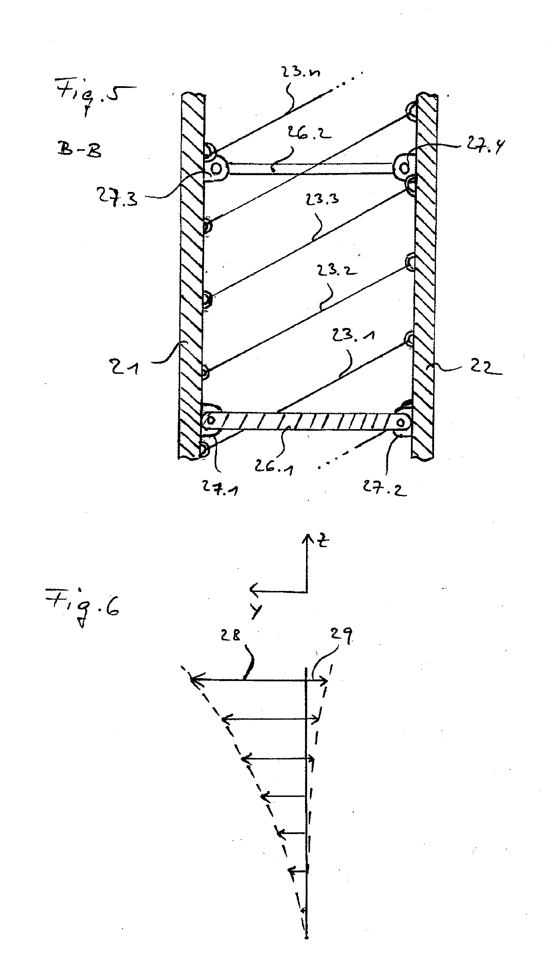

Figur 4 zeigt einen vergrößerten Ausschnitt der Figuren 2 und 3 im Bereich des ersten Längsträgers 12. Skizziert ist ein Obergurt 21 und ein Untergurt 22, die in Querrichtung y durch Stangen 26.1, 26.2 und eine Diagonalverspannung 23 verbunden sind. Diese Komponenten sind in Figur 5 genauer dargestellt, die den Längsschnitt B-B von Figur 4 darstellt.

Die im Wesentlichen in Querrichtung y verlaufenden Stangen 26.1, 26.2 sind über Drehgelenke 27.1 - 27.4 so mit dem Obergurt 21 und dem Untergurt 22 verbunden, dass sich ohne die Diagonalverspannung 23.1 - 23.n Ober- und der Untergurt 21, 22 nur parallel zueinander bewegen können. Die Diagonalverspannung 23.1 - 23.n wird durch ein Element realisiert, das nur in Zug- und nicht in Druckrichtung eine Gegenkraft erzeugt. Im einfachsten Fall werden Seile oder Kettenverbindungen verwendet. Auch auf Zug belastbare Faserkompositmaterialien können verwendet werden. Durch den schrägen Verlauf der Diagonalverspannung 23.1 - 23.n wird die gewünschte Anisotropie der elastischen Verformbarkeit bewirkt.

Wie in Figur 6 skizziert, liegen für die positive Querrichtung y ein kleineres E-Modul und damit eine größere elastische Verformbarkeit vor. Diese Richtung stellt die Auslenkungsrichtung 28 dar. Dabei ist unmittelbar ersichtlich, dass sich für eine elastische Verformung in Auslenkungsrichtung 28 die Diagonalverspannung 23.1 - 23.n verkürzt und damit keine Gegenkräfte erzeugt. Bei einer Querkraftbeaufschlagung in die negative Querrichtung y ergibt sich - wie in Figur 6 skizziert - ein hohes E-Modul aufgrund der nunmehr auf Zug belasteten Diagonalverspannung 23.1 - 23.n. Damit folgt die in Figur 6 skizzierte elastische Verformbarkeit mit einer Auslenkungsrichtung 28 und einer Starrrichtung 29.

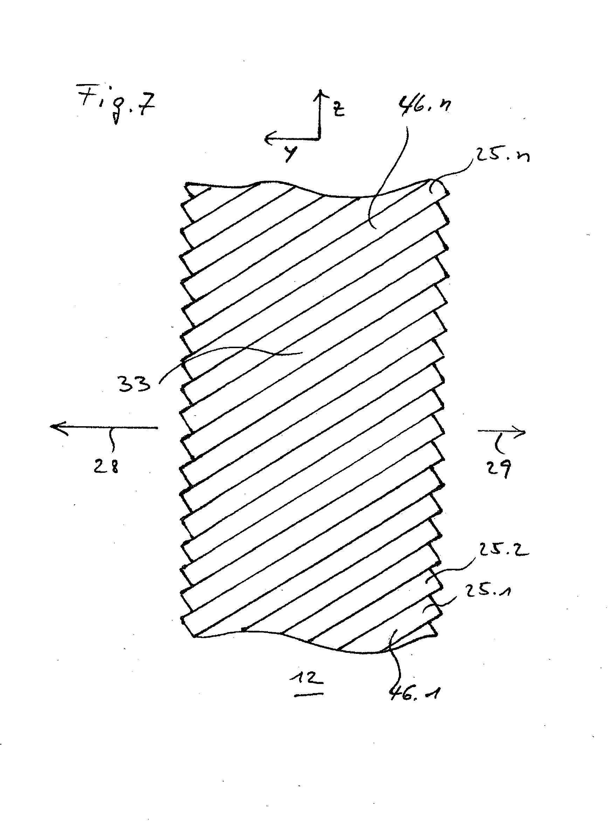

Anisotrope Längsträger 12, 13 können auch vollständig aus einem Faserverbundelement 33 bestehen. Figur 7 zeigt eine schematisch vereinfacht dargestellte Ausgestaltung eines bezüglich der Querbelastbarkeit anisotropen Faserverbundelements 33 im Längsschnitt durch den ersten Längsträger 12 mit einer durch die Längsrichtung z und die Querrichtung y aufgespannten Schnittebene. Skizziert sind schräg verlaufende Faserlagen 46.1 - 46.n, die auf Zug belastbare Faserlagen 25.1 - 25.n bilden. Details der Filamentgarne und das für deren Einbettung genutzte Matrixmaterial sind nicht gezeigt. Dabei ist das Webmuster der schräg verlaufende Faserlagen 46.1 - 46.n so angelegt, dass in der y-z-Ebene die die Zugbelastbarkeit bestimmenden Filamentgarne in Diagonalrichtung verlaufen, sodass der erste Längsträger 12 die dargestellte Auslenkungsrichtung 28 und Starrrichtung 29 aufweist.

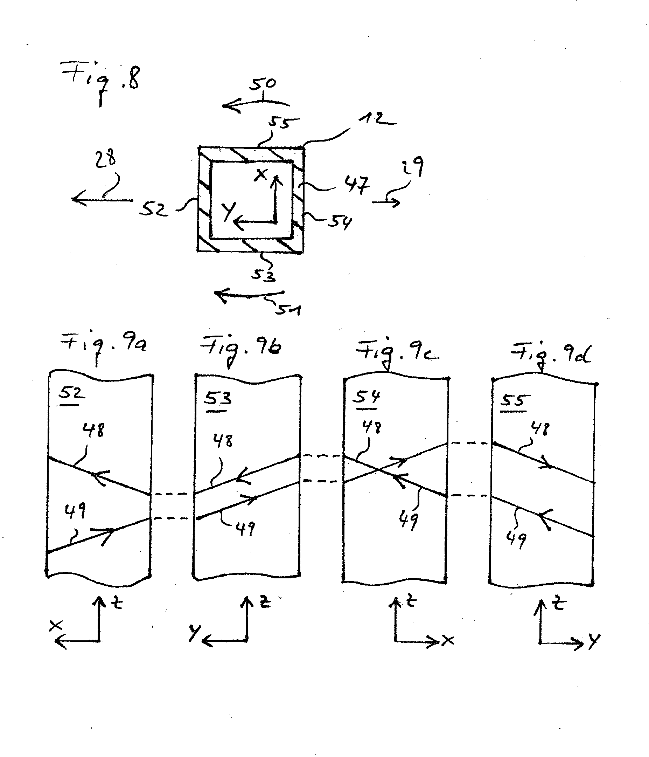

Eine alternative Ausgestaltung eines als Kompositbauteil angelegten Längsträgers 12 ist in den Figuren 8, 9a - 9d skizziert. Figur 8 zeigt eine Schnittansicht in der durch die Sehnenrichtung x und die Querrichtung aufgespannten x-y-Ebene eines Kastenträgers 47, der von einem ersten Filamentgarn 48 mit einer gegen den Urzeigersinn verlaufenden ersten Wicklungsrichtung 50 umwickelt ist. Die Wicklung eines zweiten Filamentgarns 49 erfolgt in eine zweite Wicklungsrichtung 51, die im Uhrzeigersinn gewählt ist. Die Filamentgarne können Kohlenstoff-, Glas- oder Aramidfasern umfassen.

Der gewählte Schrägverlauf der Wicklungen wird durch die Figuren 9a-9d verdeutlicht, die die in Figur 8 angegebenen Seitenflächen 52 - 55 zeigen. Für beide Wicklungsrichtungen 50, 51 wird jeweils nur eine Vollkreiswicklung gezeigt, die den Wicklungsverlauf verdeutlicht. Auf der ersten Seitenfläche 52, die parallel zur x-z-Ebene verläuft, ergibt sich für das erste und das zweite Filamentgarn 48, 49 eine Schrägwicklung mit einer positiven z-Komponente, sodass sich die Wickelungen kreuzen. Entsprechend stellt sich der Wicklungsverlauf auf der gegenüberliegenden dritten Seitenfläche 54 dar. Auf der zweiten Seitenfläche 53, die parallel zur y-z-Ebene verläuft, liegen für das erste Filamentgarn 48 eine Schrägwicklung mit einer negativen z-Komponente und für das zweite Filamentgarn 49 eine Schrägwicklung mit einer positiven z-Komponente vor. Durch die gegenläufig gewählten Wicklungsrichtungen 50, 51 ergeben sich parallele Schrägwicklungslagen. Ebenfalls parallel sind die Wicklungen auf der zur zweiten Seitenfläche 53 parallelen vierten Seitenfläche 55, wobei das Vorzeichen der z-Komponenten vertauscht ist. Beachtlich ist, dass die Neigung der parallelen Schrägrichtungen für die zweite Seitenfläche 53 und die vierte Seitenfläche 55 in Projektion betrachtet übereinstimmen und so die gewünschte Anisotropie mit der in Figur 8 dargestellten Auslenkungsrichtung 28 und Starrrichtung 29 folgt.

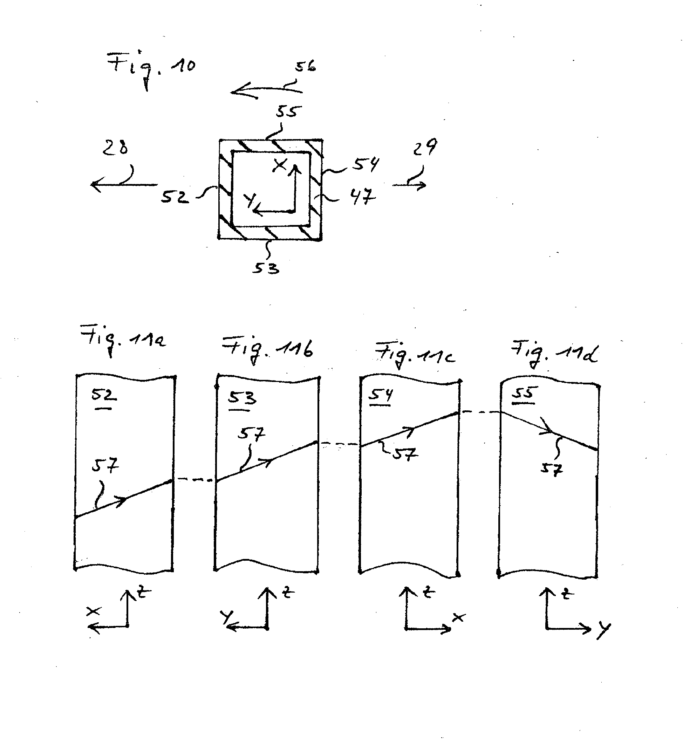

Ein weiteres Ausführungsbeispiel ist in Figuren 10, 11a - 11d dargestellt, wobei übereinstimmende Komponenten mit den gleichen Bezugszeichen bezeichnet werden. Im Unterschied zur vorausgehenden Ausführung liegt nur eine Wicklungsrichtung 56 gegen den Uhrzeigersinn für ein Filamentgarn 57 vor. Auf der ersten bis dritten Seitenfläche 52 - 54 wird eine Schrägwicklung mit positiver z-Komponente ausgeführt und auf der vierten Seitenfläche 55 wird die Schrägwicklung mit einer negativen z-Komponente gewählt. Damit ergeben sich auf allen Seitenflächen 52 - 55 parallele Schrägwicklungen, die in Projektion betrachtet nur für die zweiten und vierten Seitenflächen 53, 55 in gleicher Richtung liegen, während sich die Projektionen für die ersten und dritten Seitenflächen 52, 54 kreuzen. Damit liegt wieder die gewünschte Anisotropie der in Figur 10 skizzierten Auslenkungsrichtung 28 und Starrrichtung 29 vor. Zusätzlich ist das Torsionsmodul anisotrop. Durch die vorgegebene Wicklungsrichtung 56 ist der Querträger für die in Figur 10 gezeigte Schnittansicht in Uhrzeigerrichtung leichter um die durch die Längsrichtung z festgelegte Achse verdrehbar als gegen den Urzeigersinn.

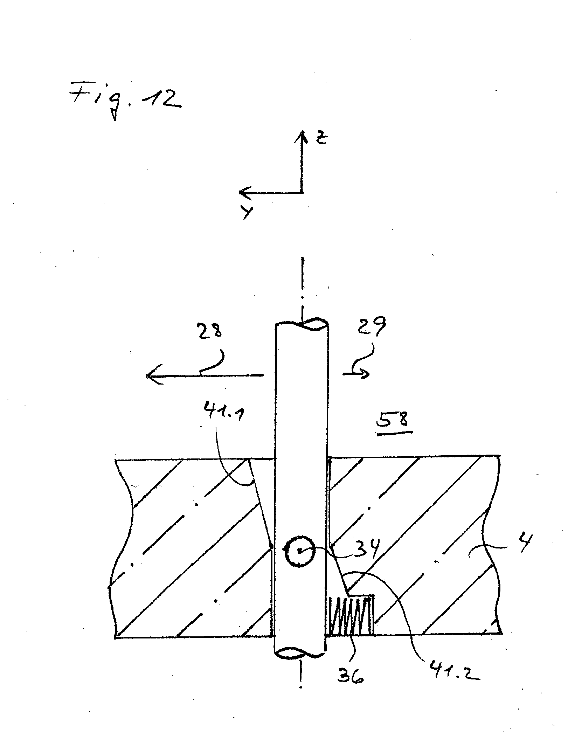

Figur 12 zeigt eine alternative Ausgestaltung, für die der Auslenkungsabschnitt 11 durch ein Drehgelenk 58 in der Nabe 4 für den exemplarisch dargestellten ersten Längsträger 12 gebildet wird. Durch die Wahl der Drehachse 34, der Anschläge 41.1, 41.2 sowie der Federanordnung 36 resultiert eine auf die Schnittebene reduzierte begrenzte Bewegungsmöglichkeit mit einer Auslenkungssrichtung 28 und einer Starrrichtung 29. Für dieses Ausführungsbeispiel können die Längsträger 12, 13 insgesamt mit hoher Querstabilität ausgebildet werden.

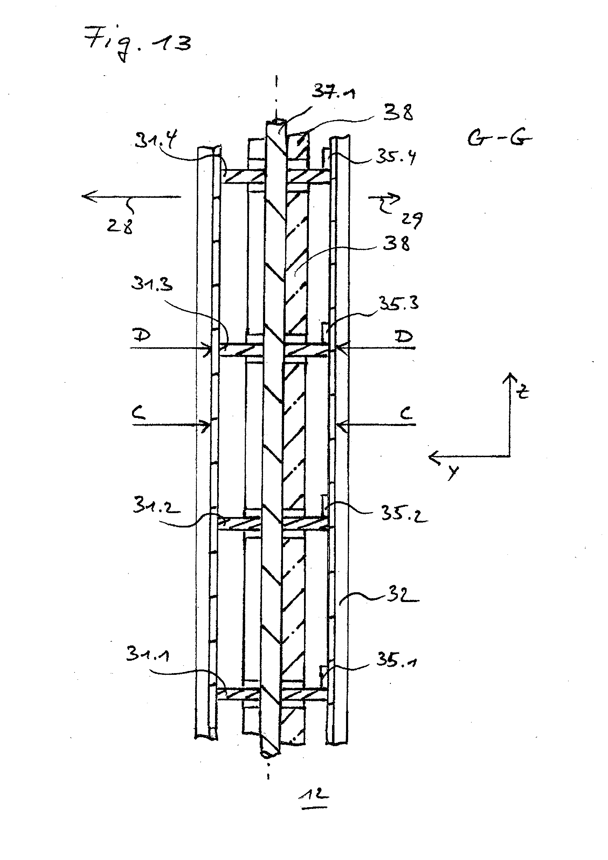

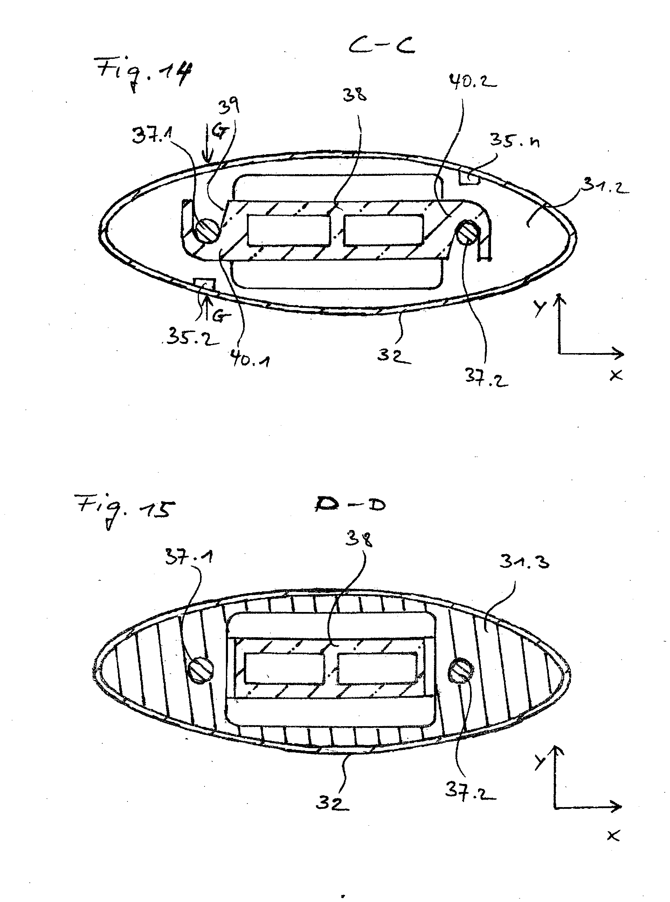

Figuren 13-15 zeigen eine weitere Ausgestaltung mit einem von der Querbelastungsrichtung abhängigen E-Modul. Dabei skizziert Figur 13 einen Längsschnitt durch den exemplarisch gewählten Längsträger 12. Schematisch vereinfacht dargestellt ist eine in Form eines zylindrischen Elements gebildete Längsstrebe 37.1 , die starr mit Profilstegen 31.1 - 31.4 verbunden ist. Diese spannen wiederum die Rotorblatthülle 32 auf. Zur Realisierung einer unterschiedlichen Querbelastbarkeit wird die Längsstrebe 37.1 jeweils zwischen zwei Profilstegen 31.1 - 31.4 von einem sich in Längsrichtung z erstreckenden Mittelträger 38 zu einer Seite hin abgestützt. Um dessen Wirkung zu verdeutlichen wird auf die in den Figuren 14 und 15 dargestellten Schnitte C-C und D-D verwiesen.

Dabei zeigen Figuren 14 und 15, dass der Mittelträger 38 durch eine Öffnung der Profilstege 31.1 - 31.4 hindurchreicht. Ferner verdeutlicht Figur 14, dass der Mittelträger 38 jeweils im Freibereich zwischen zwei Profilstegen 31.1 - 31.4 in die Sehnenrichtung x durch Seitenteile 40.1 - 40.2 hinausragt. Dabei sind die Seitenteile 40.1, 40.2 spiegelbildlich zueinander angelegt und weisen in die positive oder die negative Querrichtung y eine Fangöffnung zur Aufnahme der Längsstreben 37.1, 37.2 auf. Dabei ist ersichtlich, dass die asymmetrische Abstützung die Starrrichtung 29 und die Öffnung in den Seitenteilen 40.1, 40.2 die Auslegungsrichtung 28 für die beiden Längsstreben 37.1, 37.2 festlegen.

Durch den zentral verlaufenden Mittelträger 38 ergibt sich durch die Anschläge 35.1 - 35.n eine Begrenzung der Relativbewegung zwischen dem Mittelträger 38 zum einen und den Längsstreben 37.1, 37.2, den Profilstegen 31.1 - 31.4 und der Rotorblatthülle 32 zum anderen, sodass für die dargestellte Ausgestaltung ein radial kurzerbauender Auslenkungsabschnitt 11 bevorzugt wird.

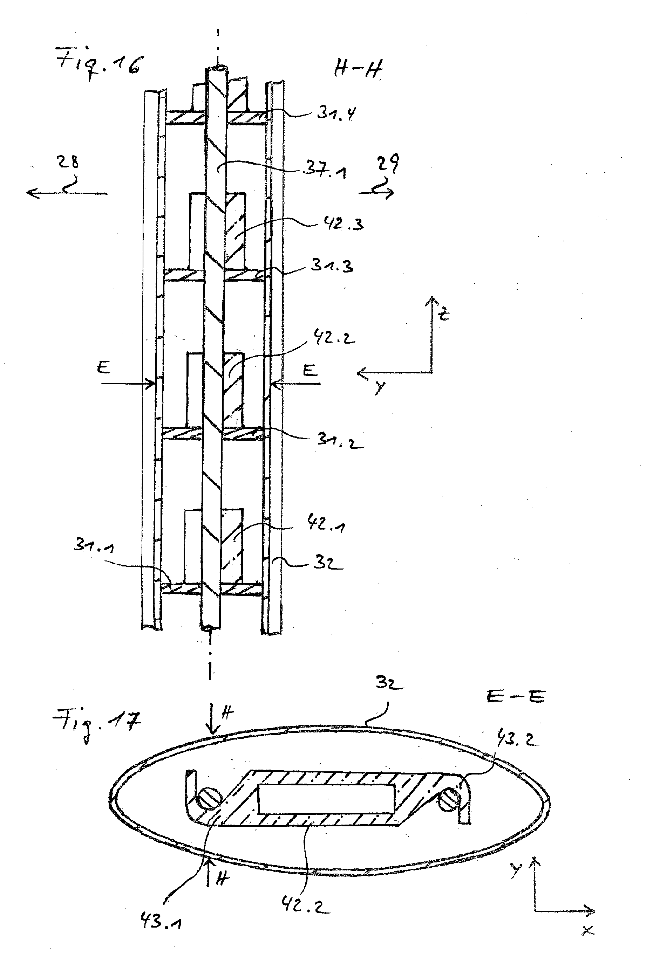

Figuren 16 und 17 zeigen eine Weiterentwicklung, die über den gesamten Blattlängsverlauf angewandt werden kann, um eine größere Querauslenkung zu erzielen. Dabei zeigt Figur 16 einen zur Figur 13 entsprechenden Schnitt in der y-z-Ebene, wobei auf die in Figur 16 skizzierte Schnittlinie E-E verwiesen wird. Figur 16 stellt mehrere Mittelträgersegmente 42.1 - 42.3 mit begrenzter Längserstreckung dar, die jeweils mit einem Profilsteg 31.1 - 31.4 verbunden sind. Dabei sind die Profilstege 31.1 - 31.4 ihrerseits, wie in der vorausgehenden Ausgestaltung, mit den Längsstreben 37.1, 37.2 sowie der Rotorblatthülle 32 verbunden. Durch die seitliche Anlage der Mittelträgersegmente 42.1 - 42.3 entlang eines Teilabschnitts der Längsstreben 37.1, 37.2 erfolgt eine Abstützung nur gegenüber einer Durchbiegung in die negative y-Richtung, die somit die Starrrichtung 29 festlegt. In die entgegengesetzte Querrichtung, der positiven y-Richtung, kann wie in Figur 17 dargestellt, die Längsstrebe 37.1, 37.2 aus einer Öffnung in den Seitenteilen 43.1, 43.2 bei einer elastischen Verformung herauswandern. Durch die spiegelbildliche Anordnung dieser Öffnungen an den Seitenteilen 34.1, 34.2 sind, wie in Figur 13 skizziert, die Auslenkungsrichtung 28 und die starre Richtung 29 für die beiden Längsstreben 37.1, 37.2 spiegelbildlich angeordnet, sodass für unterschiedliche Anströmungsrichtungen ein Ausweichen der jeweils stromabwärts angeordneten Längsstrebe 37.1 und damit das gewünschte Eindrehen in Richtung der Fahnenstellung bewirkt wird.

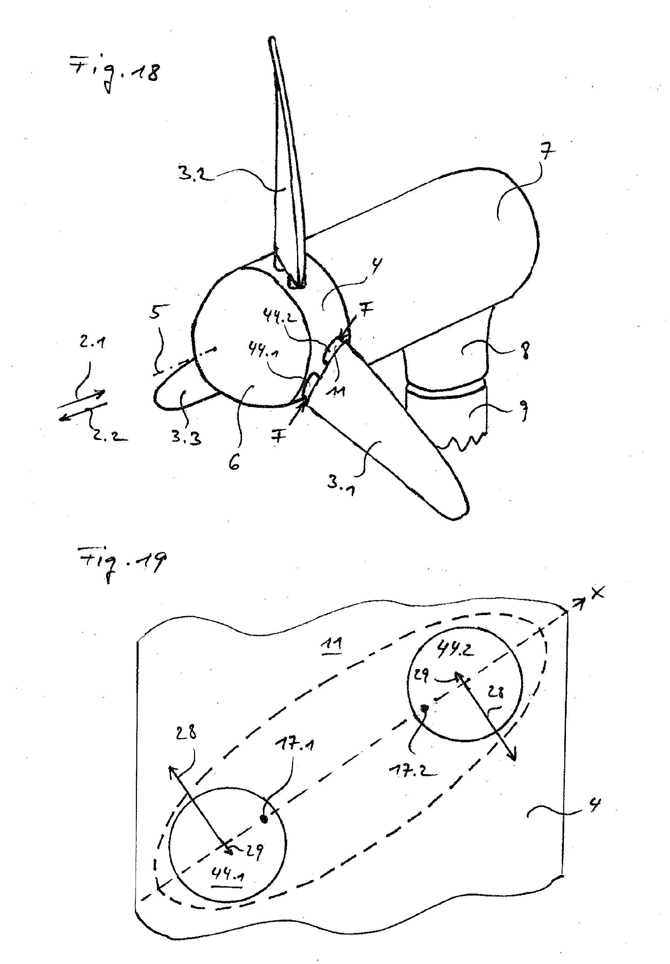

Figur 18 zeigt eine Ausführungsform der erfindungsgemäßen Horizontalläuferturbine 1, für die der Auslenkungsabschnitt 11 auf einen Teilabschnitt der Blatterstreckung begrenzt ist. Dieser liegt für das dargestellte Ausführungsbeispiel im Bereich des Blattanschlusses 10. Die restlichen Bereiche der Rotorblätter 3.1 - 3.3 und damit der hydraulisch wirksamen Bereiche des Blatts, werden für die dargestellte Ausführungsform möglichst starr ausgebildet, wobei für eine Ausgestaltung ein Gussbauteil verwendet wird. Für eine alternative Ausführung werden Faserverbundmaterialien eingesetzt, wobei eine durch mehrere gekreuzte Diagonallagen ausgesteifte Rotorblatthülle mit einer hohen Struktursteifigkeit gewählt wird.

Der in Figur 19 dargestellte Schnitt entlang der in Figur 18 skizzierten Schnittlinie F-F zeigt einen doppelten Blattanschluss, der zugleich als Auslegungsabschnitt 11 dient. Dieser umfasst zwei Blattwurzeln 44.1, 44.2, die auf der Nabe einen Einbau an zwei Abstützungspunkten mit Axialabstand ermöglichen. Dies reduziert Biegemomente auf der Welle sowie Kerbbelastungen, die sich bei einer Einspannung an einem einzelnen Holm ergeben. Dies vereinfacht die Ausgestaltung der Blattwurzeln 44.1, 44.2, um die gewünschte spiegelbildliche elastische Verformbarkeit mit einer Auslenkungsrichtung 28 und einer Starrrichtung 29 zu realisieren. Für ein Ausführungsbeispiel können anstatt anisotrop elastischer Strukturen Gelenke mit einer Drehachse parallel zur Projektion der Profilsehne 8 verwendet werden, wobei die Gelenkkomponenten und insbesondere die zur Abstützung der Starrrichtung 29 notwendigen Federpakete innerhalb der Nabe 4 aufgenommen sind.

Ferner skizziert Figur 19, dass die Kraftangriffspunkte 17.1, 17.2 für den vorliegenden, im Wesentlichen nicht hydraulisch wirksamen Auslenkungsabschnitt 11 als Schnitt der Auffädellinie der Druckpunkte der Blattelemente, die den hydraulischen Teil des Rotorblatts bilden, der Nabenmantelfläche festgelegt werden. Des Weiteren verdeutlicht Figur 19, dass die Kraftangriffspunkte 17.1, 17.2 dann innerhalb der räumlichen Ausdehnung des ersten Längsträgers 12 und des zweiten Längsträgers 13 liegen, wenn sowohl für die erste Anströmungsrichtung 2.1 als auch für die zweite Anströmungsrichtung 2.2 der jeweils wirksame Kraftangriffspunkt 17.1, 17.2 so angeordnet ist, dass eines der beiden gewichteten Flächenzentren 14.1, 14.2 stromaufwärts und das jeweils andere stromabwärts liegt.

Des Weiteren können erfindungsgemäße Horizontalläuferturbinen 1 raumgreifende Rotorblätter 3.1 - 3.3 aufweisen. Hierunter wird verstanden, dass die Auffädellinien der Kraftangriffspunkte nicht einer Radialstrahlgeometrie folgen, sondern zur Radialrichtung in Winkelstellung stehen. Dabei sind vorwärts und rückwärts gepfeilte Flügel oder sichelförmig in der Rotorebene oder aus dieser heraus gekrümmte Verläufe denkbar. Die erfinderische Lehre kann auch auf solche Rotorblätter angewandt werden, wobei die in der vorausgehenden Darlegung angenommene Längsrichtung z jeweils für einen radial begrenzten Abschnitt, ein Blattelement, der Rotorblätter 3.1 - 3.3 definiert ist. Des Weiteren sollen die Rotorblätter 3.1 - 3.3 eine zur Anpassung an die radial abhängige Umfangsgeschwindigkeit notwendige Blattverwindung aufweisen.

Für eine Weitergestaltung der Erfindung wird ein Auslenkungsabschnitt verwendet, für den das elastische Verhalten des Rotorblatts 3.1 - 3.3 und damit dessen Bewegung in Richtung der Fahnenstellung erst oberhalb einer vorgegebenen Schnelllaufzahlschwelle λ_{S} auftritt. Dabei wird eine Gelenkanordnung mit einer nichtlinearen Federvorrichtung verwendet, die das E-Modul in die Auslenkungsrichtung 28 erst oberhalb eines vorgegebenen Schwellwerts für die Querkraft F_{Q} so reduziert, dass ein Eindrehen in Richtung der Fahnenstellung erfolgt. Zu diesem Zweck kann als nichtlineares Federelement ein hydraulischer Stellzylinder mit einer oberhalb eines Solldrucks schaltenden Ventileinrichtung versehen werden. Erfolgt im Überlastfall die Entleerung des Stellzylinders des Federelements über dieses Ventil in einen Druckbehälter, besteht die Möglichkeit, beim Wegfall der Starkanströmung das Druckmedium in den Stellzylinder durch eine rein passive Ventilanordnung zurückzuspeisen und so die vor der Auslöseschwelle vorliegende Federkraft wieder herzustellen. Damit ist keine ständig arbeitende Steuerungseinrichtung notwendig und es besteht die Möglichkeit eines rein passiven Betriebs. Weitere Ausgestaltungen im Rahmen der nachfolgenden Schutzansprüche sind denkbar.

### Bezugszeichenliste

- 1: Horizontalläuferturbine
- 3.1 - 3.3: Rotorblatt
- 2.1: erste Anströmungsrichtung
- 2.2: zweite Anströmungsrichtung
- 4: Nabe
- 5: Drehachse
- 6: Haube
- 7: Maschinengondel
- 8: Turmadapter
- 9: Stützstruktur
- 10, 10.1, 10.2: Blattanschlusses
- 11: Auslenkungsabschnitt
- 12: erster Längsträger
- 13: zweiter Längsträger
- 14.1, 14.2: gewichtetes Flächenzentrum
- 15: erster Druckpunkt
- 16: zweiter Druckpunkt
- 17.1, 17.2: Kraftangriffspunkt
- 18: Profilsehne
- 19: Rotationsebene
- 20: Profilschnitt
- 21: Obergurt
- 22: Untergurt
23,
- 23.1 - 23.n: Diagonalverspannung
- 24: Starrelement
- 25.1 - 25.n: auf Zug belastbarer Faserlage
- 26.1, 26.2: Stange
- 27.1 - 27.4: Drehgelenk
- 28: Auslenkungsrichtung
- 29: Starrrichtung
- 30: Rotorblattspitze
31,
- 31.1 - 31.4: Profilsteg
- 32: Rotorblatthülle
- 33: Faserverbundelement
- 34: Drehachse
- 35.1 - 35.4: Anschläge
- 36: Federanordnung
- 37.1, 37.2: Längsstrebe
- 38: Mittelträger
- 39: Öffnung
- 40.1, 40.2: Seitenteile
- 42.1 - 42.3: Mittelträgersegment
- 43.1 - 43.2: Seitenteil
- 44.1, 44.2: Blattwurzel
- 45: Axialabstand
- 46.1 - 46.n: schräg verlaufende Faserlage
- 47: Kastenträger
- 48: erstes Filamentgarn
- 49: zweites Filamentgarn
- 50: zweite Wicklungsrichtung
- 51: ersten Wicklungsrichtung
- 52: ersten Seitenfläche
- 53: zweite Seitenfläche
- 54: dritte Seitenfläche
- 55: vierte Seitenfläche
- 56: Wicklungsrichtung
- 57: Filamentgarn
- 58: Drehgelenk

- x: Sehnenrichtung
- y: Querrichtung
- z: Längsrichtung
- F_{D}: Strömungswiderstand
- F_{L}: Auftrieb
- F_{R}: resultierende hydrodynamische Kraft
- F_{P}: parallele Kraftkomponente
- F_{Q}: Kraft in Umfangsrichtung
- A_{S}: Schnelllaufzahlschwelle
- v: Anströmungsgeschwindigkeit
- u: Umfangsgeschwindigkeit
- w: effektive Anströmung
- α₁, α₂, α₃, α₄: hydrodynamischer Anstellwinkel
- β₁, β₂: Anströmungswinkel
- δ₁, δ₂ δ₁, δ₂: Winkel zur Rotationsebene

## Patentansprüche

1. Horizontalläuferturbine zur Energiegewinnung aus einer Fluidströmung mit einer ersten Anströmungsrichtung (2.1) und einer zweiten Anströmungsrichtung (2.2), die im Bereich von 150° bis 210° von der ersten Anströmungsrichtung (2.1) abweicht, umfassend
eine Nabe (4) mit einer Drehachse (5), die eine Axialrichtung und hierzu senkrecht stehende Umfangs- und Radialrichtungen festlegt;
mindestens ein Rotorblatt (3.1 - 3.3) mit einem Blattanschluss (10) zur Befestigung an der Nabe (4);
**dadurch gekennzeichnet, dass**
entlang der Längserstreckung des Rotorblatts (3.1 - 3.3) wenigstens ein Auslenkungsabschnitt (11) zur passiven Drehung des Rotorblatts (3.1 -3.3) in Richtung der Fahnenstellung vorliegt, der einen ersten Längsträger (12) und einen zweiten Längsträger (13) umfasst, die durch wenigstens ein Starrelement (24) am Rotorblatt (3.1 - 3.3) wenigstens mittelbar verbunden sind;
wobei dem ersten und dem zweiten Längsträger (12, 13) für einen Profilschnitt in Umfangsrichtung im Bereich des Auslenkungsabschnitts (11) jeweils ein gewichtetes Flächenzentrum (14.1, 14.2) zugeordnet ist; und
für die erste und die zweite Anströmungsrichtung (2.1, 2.2) bei Schnelllaufzahlen λ oberhalb einer Schnelllaufzahlschwelle λ_{S} bezüglich des Kraftangriffspunkts (17.1, 17.2) der resultierenden Kraft am Profilschnitt (20) jeweils ein gewichtetes Flächenzentrum (14.1, 14.2) stromaufwärts und das jeweils andere gewichtete Flächenzentrum (14.1, 14.2) stromabwärts liegt; und
der Längsträger (12, 13), dessen gewichtetes Flächenzentrum (14.1, 14.2) stromaufwärts zum Kraftangriffspunkt (17.1, 17.2) liegt, eine geringere Querauslenkung aufgrund der durch die Anströmung erzeugten, senkrecht zur Profilsehne stehenden Querkraft (F_{Q}) am Kraftangriffspunkt (17.1, 17.2) als der jeweils andere Längsträger (12, 13) aufweist, dessen gewichtetes Flächenzentrum (14.1, 14.2) stromabwärts liegt.

2. Horizontalläuferturbine nach Anspruch 1, wobei der erste und der zweite Längsträger (12, 13) ein anisotropes E-Modul in Querrichtung (y) aufweisen.

3. Horizontalläuferturbine nach einem der Ansprüche 1 oder 2, wobei der erste und/oder der zweite Längsträger (12, 13) einen Obergurt (21) und einen Untergurt (22) umfasst, die durch die Querkraft (F_{Q}) elastisch biegbar sind und die durch wenigstens eine schräg zur Längsrichtung des Obergurts (21) und/oder des Untergurts (22) verlaufende Diagonalverspannung (23.1 - 23.n) mit einer Richtungskomponente in Längsrichtung (z) verbunden sind.

4. Horizontalläuferturbine nach einem der Ansprüche 1 - 3, wobei der erste und/oder der zweite Längsträger (12, 13) ein Faserverbundelement (23) mit bezüglich einer durch die Längsrichtung (z) und die Querrichtung (y) aufgespannten Schnittebene schräg verlaufenden Faserlagen (46.1 - 46.n) und/oder eine anisotrope Bewickelung mit einem Filamentgarn (48, 49, 57) umfasst.

5. Horizontalläuferturbine nach einem der vorausgehenden Ansprüche, wobei der Auslenkungsabschnitt (11) ein Drehgelenk (58) umfasst, dem eine einseitige Federanordnung (36) und/oder ein einseitiger Anschlag zugeordnet sind.

6. Horizontalläuferturbine nach einem der vorausgehenden Ansprüche, wobei der Auslenkungsabschnitt (11) auf einen Teil der Längserstreckung des Rotorblatts beschränkt ist.

7. Horizontalläuferturbine nach Anspruch 6, wobei der Auslenkungsabschnitt (11) in der radial inneren Hälfte des Rotorblatts (3.1 - 3.3) angeordnet ist.

8. Horizontalläuferturbine nach einem der vorausgehenden Ansprüche, wobei der Auslenkungsabschnitt (11) einen Blattanschluss (10) mit zwei Blattwurzeln (44.1, 44.2) umfasst.

9. Horizontalläuferturbine nach Anspruch 8, wobei die zwei Blattwurzeln (44.1, 44.2) in Axialrichtung beabstandet sind.

10. Horizontalläuferturbine nach einem der vorausgehenden Ansprüche, wobei das Rotorblatt (3.1 - 3.3) einen punkt- oder doppeltsymmetrischen Profilabschnitt umfasst.
